# EUROPEAN PATENT APPLICATION

(11) **EP 4 553 017 A1**
(43) Date of publication of application: **14.05.2025**
(21) Application number: 23208535.7
(22) Date of filing: 08.11.2023
(51) Int. Cl.: B65G 54/02

(54) **CARRIER SYSTEM FOR A LINEAR MOTOR CONVEYING SYSTEM, LINEAR MOTOR CONVEYING SYSTEM AND CORRESPONDING METHOD**

(71) Applicant: Robert Bosch GmbH, 70442 Stuttgart (DE)
(72) Inventor: Van der Woude, Lars, 5644 EA Eindhoven (NL); Tielen, Niels, 4871 LM Etten-Leur (NL); Spruit, Louis, 5502CA Veldhoven (NL); Faassen, Ronald, 5351 LA Berghem (NL); Peters, Piet, 5731 EN Mierlo (NL); Aarden, Walter, 4891 ZJ Rijsbergen (NL)

(57) **Abstract**

The invention relates to a carrier system (580) for a linear motor conveying system, comprising two carrier modules (550), two pivot mechanisms (560), and a link component, wherein each of said two carrier modules comprises a carrier component and at least two wheels, wherein each of said two pivot mechanisms is arranged at a respective one of said two carrier modules, wherein the link component is pivotally connected with each of said link mechanisms so as to connect said carrier modules with each other, wherein the link component is pivotally connected with each of said link mechanism, pivotable about a respective first pivot axis (A1), wherein said first pivot axes are oriented along a height direction (z) and perpendicular to a conveying direction (R), and wherein the carrier system is configured such that at least one of said two carrier modules is pivotable about a second pivot axis (A2), relative to a remaining part of the carrier system or relative to said track module when received therein, wherein said second pivot axis is oriented laterally and perpendicular to said conveying direction (R). The invention also relates to such a linear motor conveying system and a method.

## Description

The present invention relates to a carrier system for a linear motor conveying system, to a linear motor conveying system and to a method for providing a linear motor conveying system for, e.g., carrying a payload. The linear motor conveying system comprises one or more track modules and one or more carrier systems to be guided in the one or more track modules.

### Background of the invention

Linear conveying systems like linear motor conveying systems can be used in different applications, e.g., industrial applications. For example, linear motor conveying systems can be used in the field of high-speed conveyance solutions for in-machine and inter-machine transportation. Such solutions can be inverted linear motor systems, which can control small workpiece carriers accurately and with high movement dynamics. The carriers themselves can be passive.

### Disclosure of the invention

According to the invention, a carrier system, a linear motor conveying system and a corresponding method with the features of the independent claims are proposed. Advantageous embodiments are subject-matter of dependent claims and of the following description.

The invention relates to linear motor conveying systems and carrier systems used therein. Such a linear motor conveying system comprises one or more track modules and one or more carrier systems to be guided in the one or more track modules. The track modules can be standardized modules, several of such modules can be connected to each other to form a track system. A track module has or defines at least one conveying path, i.e., a path along which the carrier systems are to be guided and moved. Such track modules can be of different types, e.g., straight modules, curve modules, and switch modules. Such different modules in required numbers can be connected to form a track system according to specific needs. While straight modules and curve modules typically have one conveying path, a switch module can have at least two conveying paths, or one conveying path split into two conveying paths. A carrier module received in such track module can then be moved along such conveying path in a conveying direction. With a typical arrangement of such track modules at the ground, the conveying direction is horizontally oriented.

An embodiment of the invention relates to such a carrier system. The carrier system comprises two carrier modules, two pivot mechanisms, and a link component. Each of said two carrier modules comprises a carrier component and at least two wheels. Typically, a carrier has more wheels, e.g., four, five or six. The wheels can be (rotatably) mounted on respective legs of the carrier component, for example. The carrier module is configured to be received between a first side component and a second side component of a track module. Track modules will be described in more detail later. At least a first one of the two wheels and at least a second one of the two wheels are arranged at the carrier component opposite to each other, such that the at least one first wheel faces the first side component and the at least one second wheel faces the second side component, when received in the track module. In particular, the wheels contact a respective bearing surfaces of the respective first or second side part, when the carrier modules are received in the track module. As will be explained later, the carrier modules can comprise four or six wheels, with two or three per side.

In an embodiment, at least one of said carrier modules further comprises two counterpart electro-magnetic motor units or motor components. A first one of the two counterpart electro-magnetic motor components and a second one of the two counterpart electro-magnetic motor components are arranged at the carrier component opposite to each other, such that the first counterpart electro-magnetic motor component faces a first electro-magnetic motor component of the track module and the second counterpart electro-magnetic motor component faces a second electro-magnetic motor component of the track module, when received in the track module. This allows electro-magnetic conveying of the carrier module.

Each of said pivot mechanisms is arranged at a respective one of said carrier modules. For example, the respective pivot mechanism can be connected to the respective carrier module or its carrier component. Each of said carrier modules can comprise connection interface means, in particular, at a top side, for a respective one of said pivot mechanism. Further, each of said pivot mechanism can comprise a rod or rod shape structure, for example.

The link component is pivotally connected with each of said link mechanisms so as to connect said carrier modules with each other. The link component can comprise through holes or bearings to be pivotable, with which the mentioned rods can connected. The link component is pivotally connected with each of said link mechanism, pivotable about a respective first pivot axis, wherein said first pivot axes are oriented along a height direction and perpendicular to said conveying direction. With the mentioned typical arrangement of such track modules at the ground, the height direction is vertically oriented.

The link component can be of an elongated form having two ends, wherein the link component is pivotally connected with each of said link mechanism at a respective one of said ends. Further, the link component can be configured to provide a mechanical interface for carrying a payload like a workpiece. The mechanical interface can, for example, comprise a surface, wherein said surface is aligned, at least essentially, with said conveying direction. Further, the link component can be made of a rigid material and/or having a rigid structure. This allows carrying a heavy load.

In this way, standardized track modules, in particular, curves and switches, can be used for payloads or workpieces of different desired sizes. The standardized curve and switch track modules typically do not allow using individual carrier modules of different sizes but require a specific size or shape of carrier modules. This allows moving higher payloads through the system, while at the same time keep using the standardized curve and switch modules.

It is noted that each of said carrier modules can comprise such two counterpart electro-magnetic motor units or components mentioned above. While operating the system is also possible with only one of said carrier modules comprising such two counterpart electro-magnetic motor components, having both of them in this way provides another advantage. The electro-magnetic force acting on both carrier modules results in an increased moving or driving force. This can be used for, e.g., the mentioned higher payloads. Using a single carrier module with increased moving force would not be possible with the standardized system, for example.

As mentioned above, such carrier modules can have six wheels, three per side. In order to provide guidance and support in the height direction, these wheels can be configured such that they not movable with respect to a respective bearing surface at the respective first side part or second side part of said track module, along said height direction and when in contact with the respective bearing surface. In other words, the wheels should constrain movement in any direction except the conveying direction (the conveying direction is perpendicular to the height direction. A way to achieve this is providing the bearing surface by rods and the wheels having a groove matching with the bearing surface or rod, the groove provided at the outer circumference of a wheel. Having five of such wheels - and a sixth one with pretension - results in a carrier module having stability, i.e. not being pivotable about a pivot axis is oriented laterally and perpendicular to said conveying direction. The sixth wheel (on either the first or second side) is not necessary for constraint (rather, it would result in over-constraint without the pretension), but is good for a symmetric carrier module and for switch modules.

However, it has now turned out that such coupling of two carrier modules with such link component, typically a rigid plate or other rigid structure, can result in an over-constraint carrier system. This is because each of said two carrier modules is stable within the track module and - at least with respect to a pivot about the lateral pivot axis - fixedly and/or rigidly connected to the other carrier module, via the link component. Due to the modularity of the system transitions between two track modules might not be smooth, i.e., there might occur a shift in height. A carrier system as mentioned above then might be exposed to strong forces applied on the wheels at such transition; this can result a reduction in lifetime.

The carrier system is configured such that at least one of said two carrier modules is pivotable about a second pivot axis, relative to a remaining part of the carrier system or relative to said track module when received therein. Said second pivot axis is oriented laterally and perpendicular to said conveying direction. This allows overcoming the over-constraint issue mentioned above. When passing such transition between two neighbouring track modules and if there is a shift in height, the carrier modules can pivot about the second axis and thus avoid or at least reduced too strong forces.

In an embodiment, at least one of said two pivot mechanisms is pivotally connected to the respective one of said two carrier modules, pivotable about a respective second pivot axis. As mentioned before, said second pivot axis is oriented laterally and perpendicular to said conveying direction. Preferably, both of said two pivot mechanisms are configured this way. This embodiment comprises that at least one of said two carrier modules is pivotable about a second pivot axis, relative to a remaining part of the carrier system.

In an embodiment, the second axis is located at a force application point at the respective carrier module, or within a pre-defined range, along the height direction, around the force application point. The force application point is a point at which a moving force for moving the carrier module within said track module applies at the carrier module, when operated. Typically, such force application point is within or in the centre of the two counterpart electro-magnetic motor components, e.g., the magnets. Having the second axis at this location allows easy and smooth pivoting.

The second axis can, in particular, be a virtual pivot axis, i.e., there is no pivoting element directly located at the second axis. Rather, the pivot mechanism can be located apart from the second axis and connected to the carrier component in a way resulting in the pivot axis being away from the actual connection point.

Due to this virtual rotation point, the carrier modules can rotate with respect to each other, and thus while moving over a track module transition, or when encountering a step on the rolling or bearing surface, the inaccuracy in the surface does not result in enormous forces due to an over-constraint design.

In an embodiment, said at least one of said two pivot mechanisms is pivotally connected to the respective one of said two carrier modules via one or more leaf springs of the carrier system. Leaf springs are easy to manufacture and mount and provide a flexible but yet sufficiently rigid structure.

In an embodiment, said at least one of said two pivot mechanisms is pivotally connected to the respective one of said two carrier modules via a rod connection mechanism of the carrier system. A rod connection mechanism, e.g., including several rods pivotally connected to each other and/or the carrier component and pivot mechanism provide a flexible but yet robust rigid structure.

In an embodiment, said at least one of said two pivot mechanisms is pivotally connected to the respective one of said two carrier modules via rollers or balls of the carrier system, said rollers or balls being rollable along a curved surface of the respective one of said two carrier modules. Such configuration might require very accurate manufacturing of surfaces and structures for holding the rollers or balls but allows an accurate and desired way of pivoting.

In an embodiment, said at least one of said two pivot mechanisms is pivotally connected to the respective one of said two carrier modules via one or more rubber elements of the carrier system. Rubber component have to be fixed securely but then provide a flexible but yet sufficiently rigid structure, via shear forces.

In an embodiment, said at least one of said two pivot mechanisms comprises an extension component extending into an opening of the respective one of said two carrier modules, wherein said at least one of said two pivot mechanisms is pivotally connected to the respective one of said two carrier modules at the respective second axis via the respective extension component. In this way, the second axis can be a real pivot axis, i.e., the extension component is connected to the carrier component at the second axis. This might require the second axis to be located above the two counterpart electro-magnetic motor components, e.g., the magnets, but provides are sufficiently secure connection and easy manufacturing.

It is noted that each of the different ways to provide the pivot about the second axis can be provide for both of said two pivot mechanisms. In this way, identical or very similar carrier modules and pivot mechanisms can be used. Nevertheless, two different ones of those ways can be combined in a carrier system.

Each of said two carrier modules can comprises six wheels, wherein the at least one first wheel comprises three first wheels and the at least one second wheel comprises three second wheel, as mentioned above.

In this case, in an embodiment, for at least one of said two carrier modules, a selected first wheel of the three first wheels and a selected second wheel of the three second wheels are configured such that they are movable with respect to a respective bearing surface at the respective first side part or second side part of said track module, along said height direction and when in contact with the respective bearing surface. The remaining ones of the six wheels are configured such that they are not movable with respect to a respective bearing surface at the respective first side part or second side part of said track module, along said height direction and when in contact with the respective bearing surface. The latter is, for a typical single carrier module, true for all of the six wheels. This, however, results in the over-constraint mentioned above. Having one wheel per side movable relative to the bearing surface, the over-constraint is removed, and the pivot of the carrier modules about the second pivot axis, relative to said track module, when received therein, is possible. The selected first and second wheel can be configured with a cylindric outer surface, for example, wherein the remaining wheels have the groove mentioned above. It is noted that this can also be done for both of said carrier modules.

In another embodiment, for at least one of said two carrier modules, the six wheels are configured such that they are not movable with respect to a respective bearing surface at the respective first side part or second side part of said track module, along said height direction and when in contact with the respective bearing surface. A selected first wheel of the three first wheels is configured such that it is movable with respect to the respective carrier component, along said height direction. Preferably, one or more springs can be provided to hold the selected first wheel, basically, in position with respect to a bearing shaft of the respective carrier component, on which bearing shaft the selected first wheel is supported. Further, a selected second wheel of the three second wheels is configured such that it is pivotable, with respect to a bearing shaft of the respective carrier component (on which bearing shaft the selected second wheel is supported), about an axis parallel to said conveying direction.

In this way, the mounting of the wheels is changed to create a statically determined design. Statically determined refers to a system or construction, where only unconstrainted degrees of freedom are in the planned movement directions while all other degrees of freedoms are constrained. This term is often used within precision mechanics. In general, an under-constrained system (i.e., too many unconstrained degrees of freedom) cannot be controlled (since it can move in other direction than the controlled direction) while an over-constrained system (i.e., too many constrained degrees of freedom) requires expensive tooling and tolerances to move.

In another embodiment, each of said two carrier modules comprises maximum four wheels, comprising maximum two first wheels and maximum two second wheels. In other words, a first wheel and a second wheel from a typical carrier module having six wheels can be removed. Preferably, the middle ones per side (in height direction) can be removed. Having only two wheels per side also removes the over-constraint. The track modules can, of course, have six bearing surfaces for using single carrier modules with six wheels.

Another embodiment of the invention relates to a linear motor conveying system, comprising one or more track systems, and one or more carrier systems as described above, to be received and guided in the one or more track modules. The one or each of the more carrier systems or their respective carrier modules are received or receivable in the one or each of the more track modules. In order to connect several track modules to each other, appropriate connection means like screws or from fittings can be provided for mechanical connection. Also, electrical connection of the electro-magnetic motor components should be provided.

In an embodiment, said one or each of said more track modules comprises a track component, and six bearing surfaces, three per side. Said track component comprises, along at least part of a conveying path, the first side part, the second side part and a bottom part, wherein the first side part and the second side part are arranged opposite to each other. The three first ones of the six bearing surfaces are arranged at or formed integrally with the first side part, and the three second ones of the six bearing surfaces are arranged at or formed integrally with the second side part, such that the three first bearing surfaces and the three second bearing surface face each other.

The carrier system can be as described above. In particular, the carrier system can have maximum for wheels for one or both carrier modules, or any of the other ways to provide the pivot.

In an embodiment, the linear motor conveying system further comprises a controlling system for controlling the linear motor conveying system to move the one or each of the more carrier systems (via at least one of their respective carrier modules) within the one or more track modules. This can comprise controlling (and powering) the electro-magnetic motor components, e.g., the coils, of the track modules in appropriate way.

In an embodiment such track module comprises a track component, and at least two bearing surfaces. Said track component comprises, along at least part of a conveying path, a first side part, a second side part and a bottom part, wherein the first side part and the second side part are arranged opposite to each other. The bottom part preferably is configured to be placed on and/or to be oriented towards and/or to be mounted to a ground surface. Thus, the bottom part can be oriented essentially horizontally, and the first and second side parts can be oriented essentially vertically. The track component can be U-shaped, seen in cross section through the conveying path or a direction of the conveying path, for example (with the first and second side parts being the legs of the U).

At least a first one of the at least two bearing surfaces is arranged at or formed integrally with the first side part, and at least a second one of the at least two bearing surfaces is arranged at or formed integrally with the second side part, such that the at least one first bearing surface and the at least one second bearing surface face each other. The track module can also comprise more than two bearing surfaces, for example, two or three first and two or three second bearing surfaces. The number of bearing surfaces typically should match with the number and/or arrangement of wheels of a carrier module.

Such track module with two side parts allows receiving a carrier module between the first side part and the second side part. Such carrier module can comprise at least two wheels. In an embodiment, the track module is configured such that the at least one first bearing surface matches with at least a first wheel of the carrier module, and that the at least one second bearing surface matches with at least a second wheel of the carrier module. If more bearing surfaces are provided at the track module, more corresponding wheels can be provided at the carrier module. With respect to the bearing surface and the wheels, matching means that a wheel can be guided by and roll on a respective bearing surface.

The track module allows receiving a state of levitation of the carrier module between the two side parts of the track module, which reduces cogging. Switches (i.e., track modules of switch type) can be taken easily, other than with track modules providing guidance from one side only, for example This also enables high speed curves. Having guidance only from one side, for example, would result in limited speed in curves, due to the centrifugal force which acts upon the carrier while moving through a curve.

In an embodiment, such track module further comprises two electro-magnetic motor components, each preferably comprising one or more electric coils. A first one of the two electro-magnetic motor components is arranged at the first side part, and a second one of the two electro-magnetic motor components is arranged at the second side part, such that the first electro-magnetic motor component and the second electro-magnetic motor component face each other. Preferably, the track module is configured such that the first electro-magnetic motor component matches with a first counterpart electro-magnetic motor component, preferably comprising one or more permanent magnets, of the carrier module, and that the second electro-magnetic motor component matches with a second counterpart electro-magnetic motor component, preferably comprising one or more permanent magnets, of the carrier module.

Having guidance only from one side, for example, would require one-sided motor components. Due to the attraction force between the magnets and coils, if the carrier module was only powered on one side, there is quite some pressure on the wheels. This means that the wheels (for example, made of plastic) would wear down relatively fast.

Another shortcoming of having guidance on one side only that is overcome, is that the carrier module was only held to the system by the attraction force of the magnets to the coils. This not only leads to problems in the curve, but also to a limited load which can be transported. Furthermore, the centre of mass of the load needed to be above the carrier module as much as possible. These problems do not or by far less occur with the system provided within the present invention.

In an embodiment, the first electro-magnetic motor component is fixed to the first side part by means of gluing and/or screwing, and/or the second electro-magnetic motor component is fixed to the second side part by means of gluing and/or screwing. This allows simple, fast and safe fixation.

In an embodiment, the track component (i.e., the first and second side part and the bottom part) is formed in one piece. This allows easy processing and manufacturing. In embodiment, the track component is made of aluminum, preferably extruded aluminum. This allows easy processing and manufacturing; in addition, aluminium allows a lightweight. It is noted that the track component can have a structure with struts or the like, further reducing the weight and improving stability.

Another embodiment of the invention relates to a method for providing a linear motor conveying system, e.g., for carrying a payload. The method comprises providing one or more track modules, said one or each of said more track modules having a first side part and a second side part. Further, two carrier modules are provided, wherein each of said carrier modules comprises a carrier component and at least two wheels, each of said carrier modules (150, 350, 650) to be received between the first side part and the second side part of the said one or one of said more track modules, wherein at least a first one of the two wheels and at least a second one of the two wheels are arranged at the carrier component opposite to each other, such that the at least one first wheel faces the first side component and the at least one second wheel faces the second side component, when received in the track module.

Further, said two carrier modules are pivotally connected with each other via a link component and two pivot mechanisms, such that the link component is pivotally connected with each of said link mechanism, pivotable about a respective first pivot axis, wherein said first pivot axes are oriented along a height direction and perpendicular to said conveying direction.

Further, the carrier system is configured such that at least one of said two carrier modules is pivotable about a second pivot axis, relative to a remaining part of the carrier system or relative to said track module when received therein, wherein said second pivot axis is oriented laterally and perpendicular to said conveying direction.

For further details and embodiments of the method it is referred to the description of the carrier system and linear motor conveying system above, which applies to the method correspondingly.

Further advantages and embodiments of the invention result from the description and the attached drawing.

It goes without saying that the features mentioned above and those still to be explained below can be used not only in the combination specified in each case, but also in other combinations or on their own, without departing from the scope of the present invention.

The invention is shown schematically in the drawing using an exemplary embodiment and is described in detail below with reference to the drawing.

### Brief description of the drawing

Fig. 1 shows a linear motor conveying system in a perspective view;
Fig. 2 shows a switch type tack module in a perspective view;
Fig. 3a shows a track module and a carrier module in a perspective view;
Fig. 3b shows the track module and the carrier module of Fig. 3a in a cross section;
Fig. 3c shows the carrier module of Fig. 3a in a perspective view;
Fig. 4a shows a carrier system in a perspective view;
Figs. 4b, 4c show the carrier system of Fig. 4a. with misalignment;
Figs. 5a, 5b show a carrier system in an embodiment in a perspective view;
Figs. 6a, 6b show a carrier system in an embodiment in a perspective view;
Figs. 7a, 7b show a carrier system in an embodiment in a perspective view;
Figs. 8a, 8b show a carrier system in an embodiment in a perspective view;
Figs.9a, 9b, 9c show a carrier system in an embodiment in a perspective view;
Fig. 10 shows a carrier system in an embodiment in a perspective view;
Figs. 11a, 11b show a carrier system in an embodiment in a perspective view; and
Fig. 12 show a method for providing a linear motor conveying system according to an embodiment.

### Detailed description of the drawing

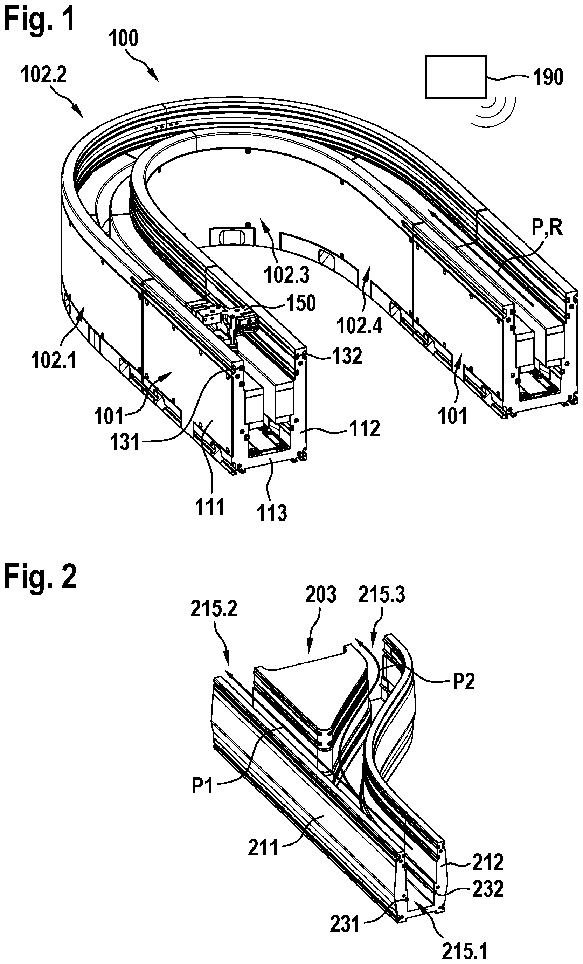

Fig. 1 schematically illustrates a linear motor conveying system 100 in a perspective view. The linear motor conveying system 100 comprises, by means of example, several track modules. Depending on the needs of a particular application for the linear motor conveying system, different types and numbers of track modules can be provided and also connected to each other to provide a track system. Types of track modules are, for example, straight modules, curve modules and switch modules.

By means of example, two track modules 101 are straight modules, and four parts or regions 102.1, 102.2, 102.3, 102.4 form a curve module, i.e., the curve module can be a single track module having a single track component.. The straight modules 101 are both identical, in the example shown in Fig. 1. It is noted, however, that straight modules can have a different length, where a length is to be seen in moving or conveying direction R along a conveying path P, indicated for a straight module 101 in Fig. 1.

The parts or segments 102.1, 102.2, 102.3, 102.4 indicate, by means of example, regions having different radii and/or curve shapes. It is noted that the curved track module in Fig. 1 is only shown schematically, in particular, with regard to the way it is built.

The straight module 101 at the lower left side in Fig. 1 will be described in more detail. The track module 101 comprises a track component 110, and at least two bearing surfaces 131, 132. By means of example, six bearing surfaces are shown in Fig. 1, while only two of them are indicated with a reference numeral.

Further, the track component 110 comprises a first side part 111, a second side part 112 and a bottom part 113, wherein the first side part 111 and the second side part 113 are arranged opposite to each other.

At least a first one of the at least two bearing surfaces (here, e.g., bearing surface 131) is arranged at or formed integrally with the first side part 111, and at least a second one of the at least two bearing surfaces (here, e.g., bearing surface 132) is arranged at or formed integrally with the second side part 112, such that the at least one first bearing surface 131 and the at least one second bearing surface 132 face each other.

By means of example, the bearing surfaces are formed by support structures like rods, arranged in or inserted into recesses in the first side part 111 and the second side part 112. In general, however, such bearing surface can also be formed by the first side part 111 and the second side part 112, e.g., by having specific shapes.

It is noted that this way of how a track module is formed, does not only apply to straight module 101 but also to other types of modules like the curve modules 102.1, 102.2, 102.3, 102.4.

Each of the straight modules and the curve modules shown in Fig. 1, have a conveying path, although only shown for one straight module 101, from a respective first to a respective second end. When the track modules are connected to each other, the individual tracking paths are also connected to from a cumulated conveying path, along which the carrier modules are guided and conveyed. Note that carrier modules can be moved or conveyed in both directions of a conveying path, either following the direction of the arrow indicating the conveying path P or reverse. As can be seen from Fig. 1, for example, a conveying path P also provides or defines conveying directions R, again the both directions mentioned.

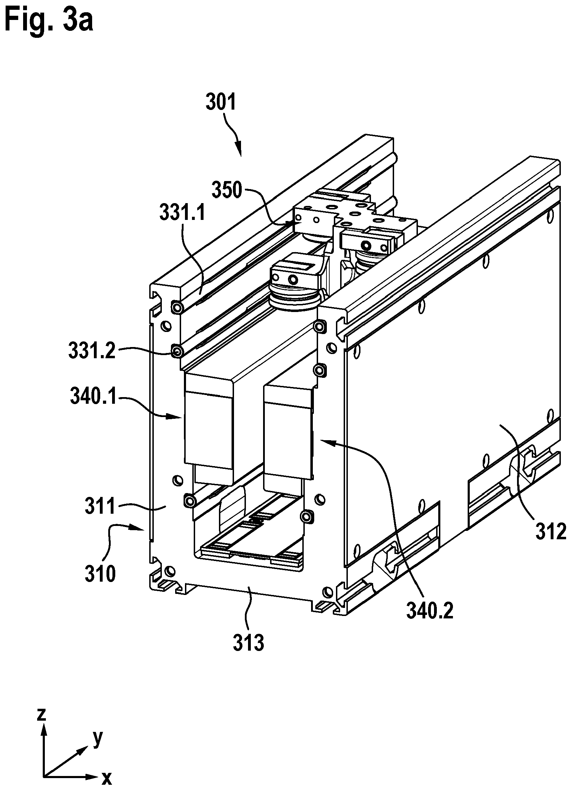

Further, the linear motor conveying system 100 comprises, by means of example, several carrier modules 150. The track module 101 is configured to receive such a carrier module 150 between the first side part 111 and the second side part 112, in particular, such that the at least one first bearing surface 131 matches with at least a first wheel of the carrier module 150, and that the at least one second bearing surface 132 matches with at least a second wheel of the carrier module 150. This is shown in Fig. 1 but will be illustrated and described in more detail later with respect to Figs. 3a to 3d.

Further, the linear motor conveying system 100 can comprise, in an embodiment, a controlling system 190 for controlling the linear motor conveying system 100 to move the carrier modules 150 within the track modules, i.e., in moving or conveying direction R, indicated in Fig. 1. It is noted that such conveying direction R is a straight line for straight modules, but it is a curved line for curved modules. For operating the linear motor conveying system 100, by means of the controlling system 190, electro-magnetic motor components, for example, at the track modules, have to be controlled.

Fig. 2 schematically illustrates a track module 203 according to an embodiment in a perspective view. Track module 203 is a switch module, i.e., a track module of the switch type. Contrary to straight modules or curve modules, the carrier module is not restricted to move from one of two ends to the other of the two ends, i.e., enter the track module at a first end and leave the track module at a second end (having a single conveying path). Rather, the carrier module can enter the switch module at a first end 215.1 and leave the switch module at either a second end 215.3 or at a third end 215.3. The switch module 203 has two conveying paths P1 and P2, where conveying path P2 diverts from conveying path P1.

In order to control a linear motor conveying system comprising such switch module, in order to make the carrier module using conveying path P1, leaving at the second end 215.2 or using conveying path P2, leaving at the third end 215.3, electro-magnetic motor components, for example, at the track modules (not shown here), are to be controlled such that the carrier module is forced either to the second end 215.2 or to the third end 215.3. If the carrier module enters the switch module at the second end 215.2 or at the third end 215.3, in both cases, the carrier module will leave the switch module 203 at the first end 215.3. In other words, both conveying paths P1, P2 are merged.

Similar to the straight modules and curve modules shown in Fig. 1, the switch module 203 comprises a track component 210 for a conveying path, e.g., P1. The switch module 203 further comprises at least two bearing surfaces 231, 232. By means of example, six bearing surfaces are shown in Fig. 2, while only two of them are indicated with a reference numeral.

Further, the track component 210 comprises, along the conveying path P1, a first side part 211, a second side part 212 and a bottom part 213, wherein the first side part 211 and the second side part 213 are arranged opposite to each other. It is noted that the second side part 211 is interrupted along the conveying path P1, due to a diversion of conveying path P2. Similar to the conveying path P1, the track component comprises, along the conveying path P2, a first side part, a second side part and a bottom part (not indicated with reference numerals here).

Switch modules like the one shown in Fig. 2, can be used together with straight modules and curve modules like the one shown in Fig. 1, in order to create a (complex) track system and linear motor conveying system. It should be considered, that the bearing surfaces of the different track modules should be of the same type.

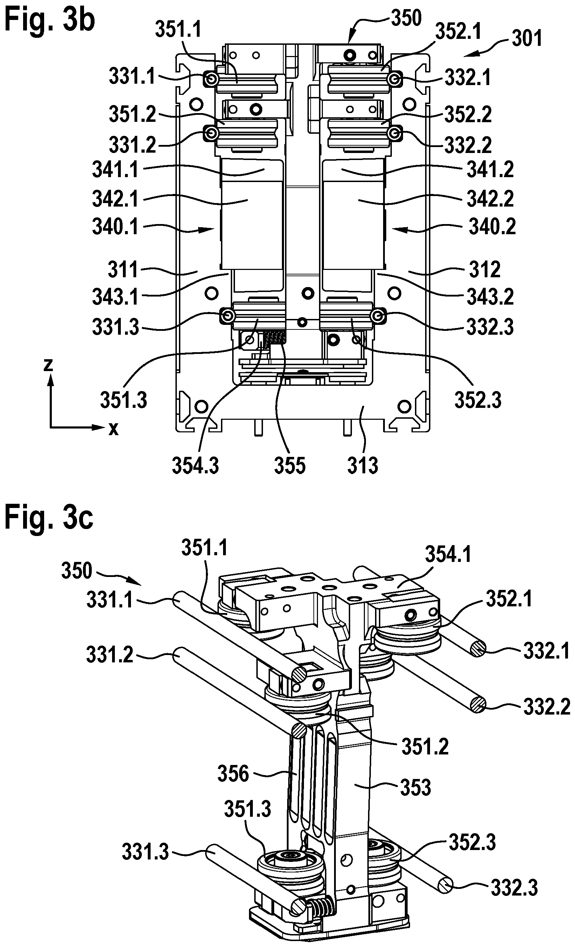

Fig. 3a illustrates a track module 301 and a carrier module 350 in a perspective view. Fig. 3 b illustrates the track module 301 and the carrier module 350 of Fig. 3a in a cross section in the x-y-plane. Fig. 3c illustrates the carrier module 350 of Fig. 3a in a perspective view but without most parts of the track module. Figs. 3a, 3b and 3c shall be described together in the following. It is noted that the axes could also be defined different, e.g., with the conveying direction in the x-direction.

By means of example and for explanation of the basic structure and composition of a track module, track module 301 is a straight module. Track module 301 can correspond to track module 101 of Fig. 1, however, showing additional components. The following explanations apply also to other types of track modules.

The track module 301 comprises a track component 310, and, by means of example, six bearing surfaces 331.1, 331.2, 331.3, 332.1, 332.2, 332.3. Further, the track component 301 comprises, along a conveying path, a first side part 311, a second side part 312 and a bottom part 313, wherein the first side part 311 and the second side part 313 are arranged opposite to each other. The conveying path is not denoted in Fig. 3a, but extends along the y-direction and can be similar or equal to conveying path P shown in Fig. 1.

By means of example, the track component 310, and also each of the first side part 311, the second side part 312 and the bottom part 313, are formed to have a structure with struts or ribs, rather than a full material structure. This allows using less material while still having a robust structure. For example, the bottom part 313 and parts of each of the first side part 311 and the second side part 312 have a double wall structure with supporting ribs between the two walls.

Three first bearing surfaces (here, e.g., bearing surfaces 331.1, 331.2, 331.3) are arranged at or formed integrally with the first side part 311, and three second bearing surfaces (here, e.g., bearing surfaces 332.1, 332.2, 332.3) are arranged at or formed integrally with the second side part 312, such that the at first bearing surfaces 331.1, 331.2, 331.3 and the second bearing surfaces 332.1, 332.2, 332.3 face each other, i.e., are oriented towards each other. In other words, all of the bearing surfaces are provided at an inner side of the respective first and second side parts, where the conveying path is formed.

By means of example, the bearing surfaces are formed by support structures like rods, arranged in or inserted into recesses in the first side part 311 and the second side part 312. In general, however, such bearing surface can also be formed by the first side part 311 and the second side part 312, e.g., by having specific shapes.

In an embodiment, the track 301 further comprises two electro-magnetic motor components, a first electro-magnetic motor component 340.1 and a second electro-magnetic motor component 340.2. The first electro-magnetic motor component 340.1 and the second electro-magnetic motor component 340.2 extend along the conveying path (here: in y-direction). The first electro-magnetic motor component 340.1 is arranged at the first side part 311, and the second electro-magnetic motor component 340.2 is arranged at the second side part 312, such that the first electro-magnetic motor component 340.1 and the second electro-magnetic motor 340.2 component face each other.

In an embodiment, the first electro-magnetic motor component 340.1 comprises one or more electric coils 341.1 (actually covered by epoxy in this Fig.); a number of the electric coils can depend on the way how the coils are manufactured. Further, the first electro-magnetic motor component 340.1 can comprise one or more magnetic or ferromagnetic cores or a structured magnetic core 342.1, e.g., made of iron. Such magnetic or ferromagnetic core increases the magnetic forces produced by the electric coils. Further, the first electro-magnetic motor component 340.1 can comprise a holding or fixing structure 343.1 (only schematically illustrated) for fixing the coils and magnetic core to the first side part 311. The first electro-magnetic motor component 340.1 can be fixed to the first side part 311 by means of gluing and/or screwing, for example.

Similarly, the second electro-magnetic motor component 340.2 comprises one or more electric coils 341.2; a number of the electric coils can depend on the way how the coils are manufactured. Further, the second electro-magnetic motor component 340.2 can comprise one or more magnetic or ferromagnetic cores or a structured magnetic core 342.2, e.g., made of iron. Such magnetic or ferromagnetic core increases the magnetic forces produced by the electric coils. Further, the second electro-magnetic motor component 340.2 can comprise a holding or fixing structure 343.2 for fixing the coils and magnetic core to the second side part 312. The second electro-magnetic motor component 340.2 can be fixed to the second side part 312 by means of gluing and/or screwing, for example.

In an embodiment, the bottom part 313 is configured to be placed on and/or to be oriented towards and/or to be mounted to a ground surface. Such ground surface would be below the bottom part 313, seen in z-direction in Figs. 3a, 3b. In an embodiment, the bottom part 313 comprises one or more holes facing the ground surface. This allows for cleaning out small piece of debris. Also, any fluid, e.g., water, is allowed to drain when used in an IP65 type of environment, for example.

The track module 301 is configured to receive a carrier module 350 between the first side part 311 and the second side part 312 and is, preferably, configured such that the first bearing surfaces 332.1, 332.2, 332.3 match with respective first wheels of the carrier module 350, and that the second bearing surfaces 332.1, 332.2, 332.3 match with respective second wheels of the carrier module 350.

While Figs. 3a, 3b shown the carrier module 350 being received in the track module 301, Fig. 3c shows the carrier module 350 as such. In addition, Fig. 3c shows the six bearing surfaces 331.1, 331.2, 331.3, 332.1, 332.2, 332.3 (these are rods, in this example). The carrier module 350 comprises a carrier component 353 and, by means of example, six wheels, three first wheels 351.1, 351.2, 351.3, and three second wheels 352.1, 352.2, 352.3 (note that wheel 352.2 is not visible in Fig. 3c). The carrier module 350 is configured to be received between the first side part 311 and the second side part 312 of the track module 301.

By means of example, three first wheels 351.1, 351.2, 351.3 and the three second wheels 352.1, 352.2, 352.3 are arranged at the carrier component 353 opposite to each other, such that three first wheels 351.1, 351.2, 351.3 face the first side component 311 and the three second wheels 352.1, 352.2, 352.3 face the second side component 312, when received in the track module 301. This can be seen in Figs. 3a, 3b. Each of the wheels 351.1, 351.2, 351.3, 352.1, 352.2, 352.3 matches with a respective one of the six bearing surfaces 331.1, 331.2, 331.3, 332.1, 332.2, 332.3. This can be seen in Fig. 3c. With respect to the bearing surface and the wheels, matching means that a wheel can be guided by and roll on a respective bearing surface. A bearing surface could, thus, also be called a rolling surface. The wheels, for example, can comprise a groove matching with the bearing surface.

Such groove, in connection with the rod-shape of the bearing surfaces, results in that the wheels are configured such that they are not movable with respect to a respective bearing surface at the respective first side part or second side part of said track module, along a height direction (here: along z-direction) and when in contact with the respective bearing surface. This can clearly be seen in Fig. 3c.

In an embodiment, the carrier module 350 further comprises two counterpart electro-magnetic motor components, a first counterpart electro-magnetic motor component 356 (shown in Fig. 3c) and a second counterpart electro-magnetic motor component (not visible in Fig. 3c). Each of such counterpart electro-magnetic motor component can comprise one or more permanent magnets, for example. The first counterpart electro-magnetic motor component 356 and the second counterpart electro-magnetic motor component 356 are arranged at the carrier component 353 opposite to each other, such that the first counterpart electro-magnetic motor component 356 faces the first electro-magnetic motor component 340.1 of the track module 301 and that the second counterpart electro-magnetic motor component faces the second electro-magnetic motor component 340.2 of the track module 301, when received in the track module 301. This can be seen in Fig. 3a.

The first counterpart electro-magnetic motor component 356 matches with the first electro-magnetic motor component 340.1, i.e., these two components electro-magnetically interact with each other in order to from a linear electro-magnetic motor. This also, typically, requires an air gap of appropriate size between these two components. Similarly, the second counterpart electro-magnetic motor component matches with the second electro-magnetic motor component 340.2, i.e., these two components electro-magnetically interact with each other in order to from a linear electro-magnetic motor. This also, typically, requires an air gap of appropriate size between these two components. Thus, the track module 301 allows receiving a state of levitation of the carrier module 350 between the two side parts of the track module 301.

As can be seen Figs. 3b, 3c, the three first bearing surfaces 331.1, 331.2, 331.3 are arranged one above the other, seen in the z-direction (which direction is orthogonal to the conveying direction, and is a height direction here). This holds also true for the corresponding second bearing surfaces.

Similarly, as can be seen Figs. 3b, 3c, the three first wheels 351.1, 351.2, 351.3 are arranged one above the other, seen in the z-direction (which direction is orthogonal to the conveying direction). This holds also true for the corresponding second wheels.

Further, by means of example, the carrier module 350 is configured to push the lower first wheel 351.3, in an outward direction O, towards the respective first side component 311, and away from the corresponding lower second wheel 352.3 that is arranged opposite. By means of example, carrier module 350 further comprises a spring means, e.g., a compression spring 355 (see Fig. 3b). The compression spring 355 is arranged at the carrier component 353 such as to provide a pre-tension force to the lower first wheel 351.3, a pre-tensioned wheel.

The carrier component 353 an comprise a wheel support means 354.3, wherein the lower first wheel 351.3 is pivotally supported by means of the wheel support means 354.3, e.g., about axis (or bearing). The compression spring 355 is arranged such as to provide the pre-tension force to pivot the lower first wheel 351.3 via the wheel support means 354.3.

Whereas the lower first wheel 351.3 is pivotable about an axis, which is parallel to the conveying direction, via the wheel support means 354.3 and is also pre-tensioned, all other wheels can also be mounted pivotable about an axis, which is parallel to the conveying direction, however, without the pre-tension. It is noted that the conveying direction is, in this example, along y-direction.

Further, it can be seen that the wheels (be it the pre-tensioned one or the other ones) are pivotable about a vertical axis (in z-direction), which allows smooth movement of the wheels along the bearing surfaces.

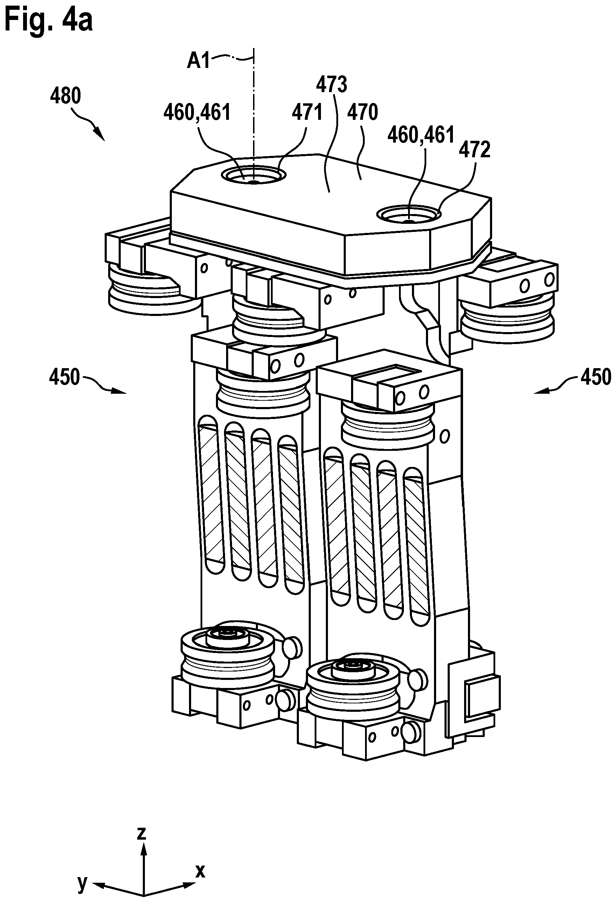

Fig. 4a schematically illustrates carrier system 480 in a perspective view. The carrier system 480 comprises two carrier modules 450, two pivot mechanisms 460, and a link component 470. The two carrier modules 450 can be identical and can also be identical to or similar to the carrier module 150 of Fig. 1 or 350 of Figs. 3a to 3c. Each of the two pivot mechanisms 460 can be identical. The pivot mechanisms 460 can be fixed our mounted to the respective carrier module 450. Each of the carrier modules 450 can be received between a first side part and a second side part of a track module as explained with respect to the carrier modules 150 of Fig. 1.

The link component 470 is, by means of example, of an elongated form having two ends. At each of these ends, a through hole 471, 472 is provided in the link component 470. Further, the link component 470 is pivotally connected with each of said link mechanism 460 at a respective one of said ends. In particular, this is established via a respective rod 461 of a respective pivot mechanism 460 held or fed into a respective one of the through holes 471, 471. This allows a pivotable linkage between the two carrier modules 460, wherein the link component 470, or a mechanical interface 473, e.g., a surface, thereof, allows carrying a payload.

The link component 470 is pivotally connected with each of said link mechanism, pivotable about a respective first pivot axis, one of these axes is denoted Aa. Said first pivot axes Aa are oriented perpendicular to the conveying direction R of said carrier modules 460 when received in a track module, and along a height direction of the carrier modules, in the example along z-direction. It is noted that the conveying direction changes with the carrier system moving in a curved module; however, the conveying direction will stay, at east in typical cases, within a plane which is typically parallel to a ground. In Fig.4a, such plane would be parallel to the x-y-plane.

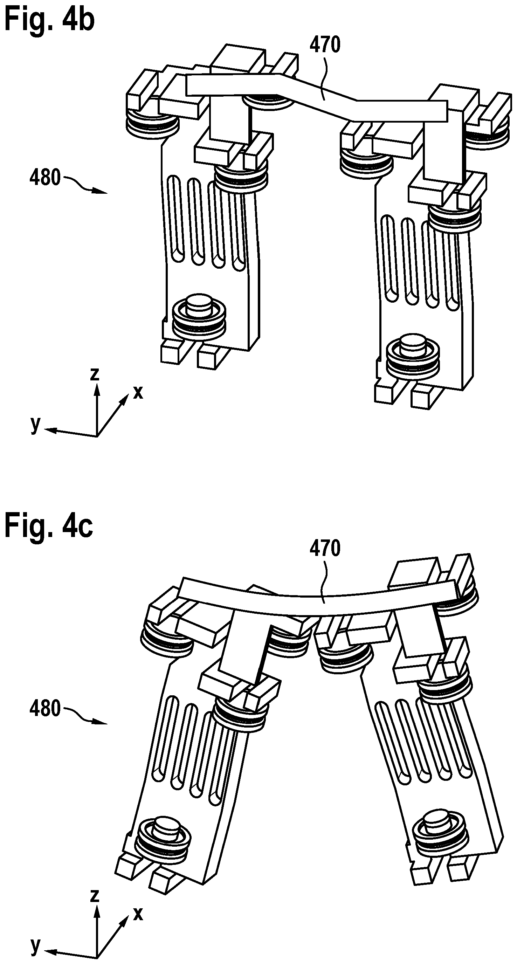

Figs. 4b and 4c schematically shows the carrier system 480 of Fig. 4a for illustrating to types of misalignment of corresponding forces onto the carrier system. Note that the link component 470 is illustrated as a thin rod for illustration purposes.

In Fig. 4b, a misalignment of two neighbouring track modules in z-direction is illustrated. When the left carrier module is in the higher (in z-direction) track module, whereas the right carrier modules in the lower track module, the situation shown occurs (exaggerated for illustration purposes). Since the link component is, typically, rigid, this results in strong forces onto the wheels.

In Fig. 4c, a misalignment of two neighbouring track modules around a lateral axis (in x-direction) is illustrated. When the left carrier module is in the pivoted or bent track module, whereas the right carrier modules in an ordinary track module, the situation shown occurs (exaggerated for illustration purposes). Since the link component is, typically, rigid, this results in strong forces onto the wheels.

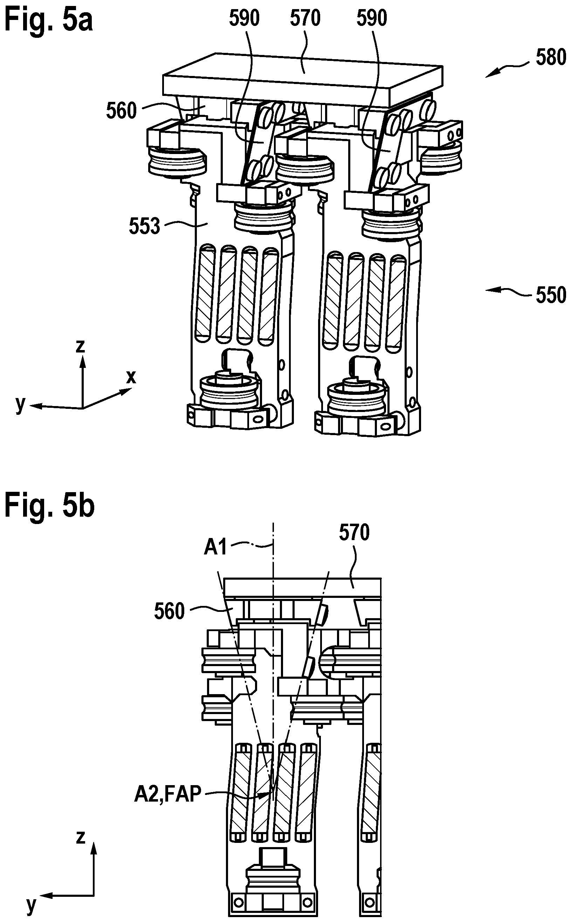

Fig. 5a schematically illustrates carrier system 580 according to an embodiment in a perspective view, Fig. 5b illustrates the carrier system 580 of Fig. 5a in a cross section. The carrier system 580 comprises two carrier modules 550, two pivot mechanisms 560, and a link component 570. The two carrier modules 550 can, basically, be identical or similar to the carrier modules 450 of Figs. 4a to 4c. The pivot mechanism 560 can, basically, also be similar to the pivot mechanism 460, at least with respect to pivoting about the axis A1.

In addition, pivot mechanisms 560 are pivotally connected to the respective one of said two carrier modules 550 via one or more leaf springs 590 of the carrier system. For example, a leaf spring 590 can be connected with a base plate of the pivot mechanism 560, e.g., by mean of screws, and to the respective carrier component 553, e.g., also by means of screws.

In this way, each of the pivot mechanisms 560 is pivotally connected to the respective one of said two carrier modules 550, pivotable about a respective second pivot axis A2. Said second pivot axis A2 is oriented laterally (here: in x-direction) and perpendicular to the conveying direction. Further, the second axis A2 is located at a force application point FAP at the respective carrier module 550, or within a pre-defined range, along the height direction (z-direction), around the force application point. This force application point FAP is a point at which a moving force for moving the carrier module 550 within said track module applies at the carrier module, when operated.

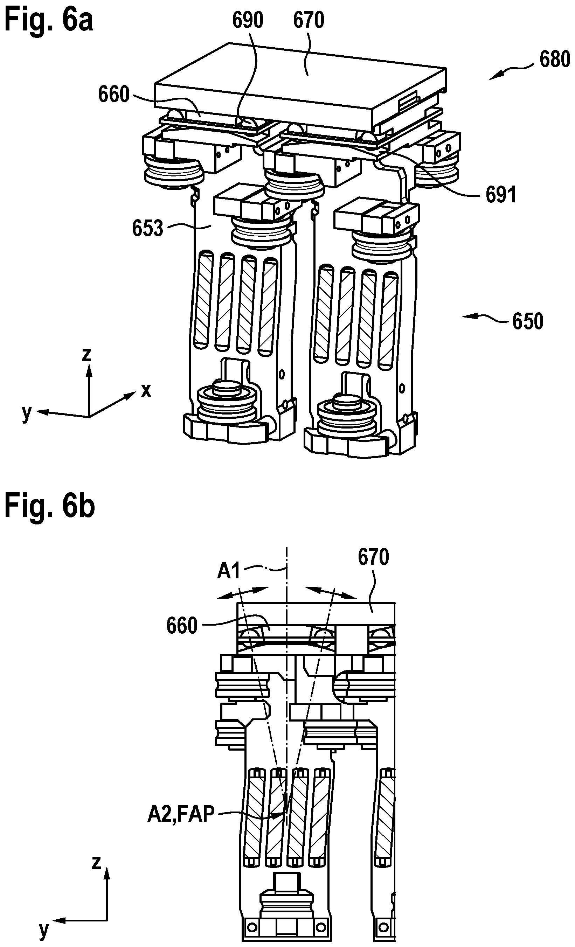

Fig. 6a schematically illustrates carrier system 680 according to an embodiment in a perspective view, Fig. 6b illustrates the carrier system 680 of Fig. 6a in a cross section. The carrier system 680 comprises two carrier modules 650, two pivot mechanisms 660, and a link component 670. The two carrier modules 650 can, basically, be identical or similar to the carrier modules 450 of Figs. 4a to 4c. The pivot mechanism 660 can, basically, also be similar to the pivot mechanism 460, at least with respect to pivoting about the axis A1.

In addition, pivot mechanisms 660 are pivotally connected to the respective one of said two carrier modules 550 via rollers 590 of the carrier system. The rollers 690 are rollable along a curved surface 961 of the respective one of said two carrier modules 650 or its carrier component 653. These rollers 690 can, for example, be held in place within a base plate or base structure of the pivot mechanism 660.

In this way, each of the pivot mechanisms 660 is pivotally connected to the respective one of said two carrier modules 650, pivotable about a respective second pivot axis A2. Said second pivot axis A2 is oriented laterally (here: in x-direction) and perpendicular to the conveying direction. Further, the second axis A2 is located at a force application point FAP at the respective carrier module 650, or within a pre-defined range, along the height direction (z-direction), around the force application point. This force application point FAP is a point at which a moving force for moving the carrier module 650 within said track module applies at the carrier module, when operated.

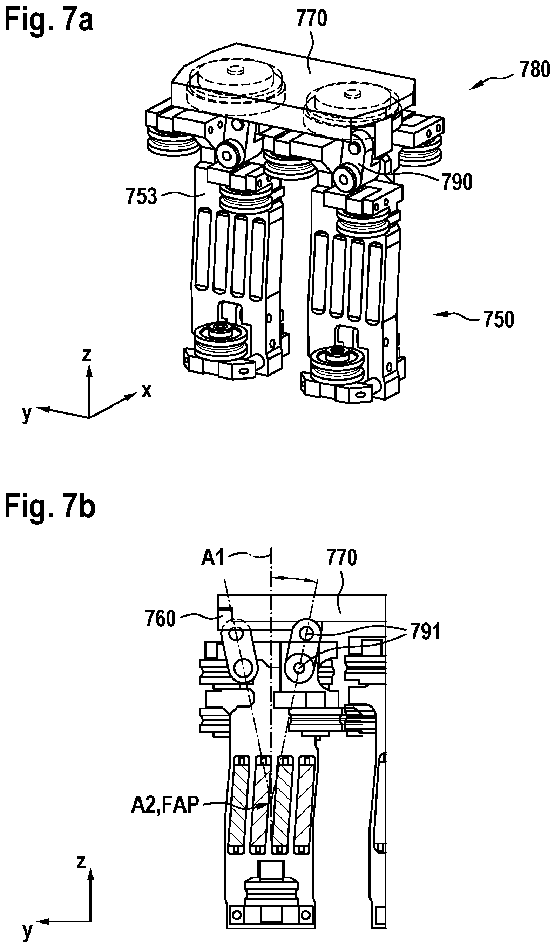

Fig. 7a schematically illustrates carrier system 780 according to an embodiment in a perspective view, Fig. 7b illustrates the carrier system 780 of Fig. 7a in a cross section. The carrier system 780 comprises two carrier modules 750, two pivot mechanisms 760, and a link component 770. The two carrier modules 750 can, basically, be identical or similar to the carrier modules 450 of Figs. 4a to 4c. The pivot mechanism 760 can, basically, also be similar to the pivot mechanism 460, at least with respect to pivoting about the axis A1.

In addition, pivot mechanisms 760 are pivotally connected to the respective one of said two carrier modules 750 via a rod connection mechanism 790 of the carrier system. Such rod connection system can comprise rods connected to, e.g., a base plate, of the pivot mechanism 760 and the carrier module 750 or its carrier component 753, e.g., by means of screws 791 or bolts; this results in pivot axis or points at these screws.

In this way, each of the pivot mechanisms 760 is pivotally connected to the respective one of said two carrier modules 750, pivotable about a respective second pivot axis A2. Said second pivot axis A2 is oriented laterally (here: in x-direction) and perpendicular to the conveying direction. Further, the second axis A2 is located at a force application point FAP at the respective carrier module 750, or within a pre-defined range, along the height direction (z-direction), around the force application point. This force application point FAP is a point at which a moving force for moving the carrier module 750 within said track module applies at the carrier module, when operated.

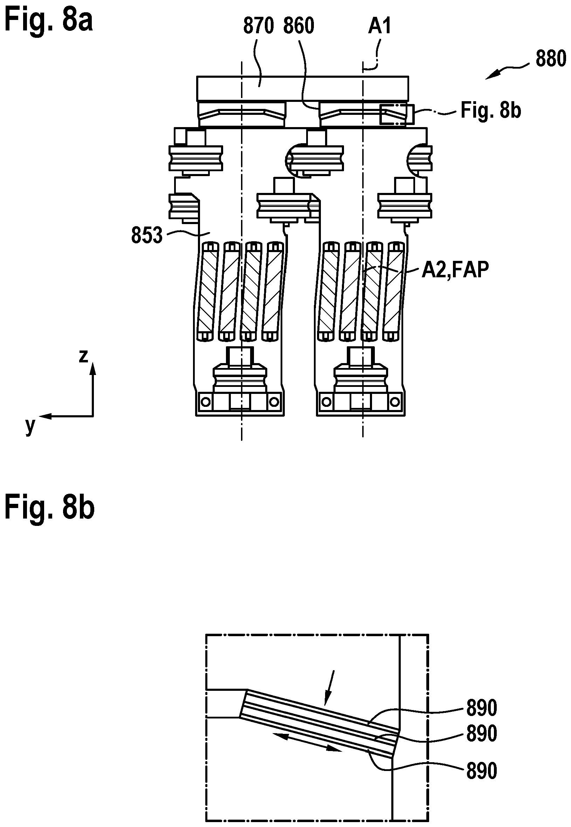

Fig. 8a schematically illustrates carrier system 880 according to an embodiment in cross section, Fig. 8b illustrates a part of the carrier system 880 of Fig. 8a in more detail. The carrier system 780 comprises two carrier modules 850, two pivot mechanisms 860, and a link component 870. The two carrier modules 850 can, basically, be identical or similar to the carrier modules 450 of Figs. 4a to 4c. The pivot mechanism 760 can, basically, also be similar to the pivot mechanism 460, at least with respect to pivoting about the axis A1.

In addition, pivot mechanisms 860 are pivotally connected to the respective one of said two carrier modules 850 via one or more rubber elements 890 of the carrier system. Such rubber elements 890 can be connected or fixed (e.g., glued) to, e.g., a base plate, of the pivot mechanism 860 and the carrier module 850 or its carrier component 853. Due to shear forces, a slight movement is possible.

In this way, each of the pivot mechanisms 860 is pivotally connected to the respective one of said two carrier modules 850, pivotable about a respective second pivot axis A2. Said second pivot axis A2 is oriented laterally (here: in x-direction) and perpendicular to the conveying direction. Further, the second axis A2 is located at a force application point FAP at the respective carrier module 850, or within a pre-defined range, along the height direction (z-direction), around the force application point. This force application point FAP is a point at which a moving force for moving the carrier module 850 within said track module applies at the carrier module, when operated.

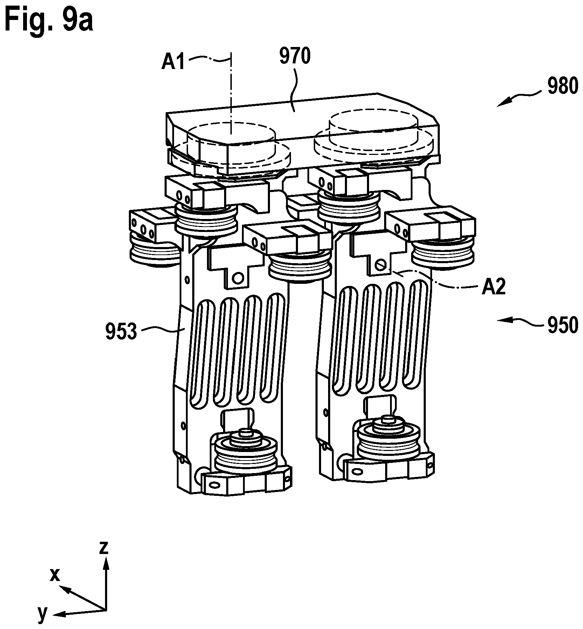

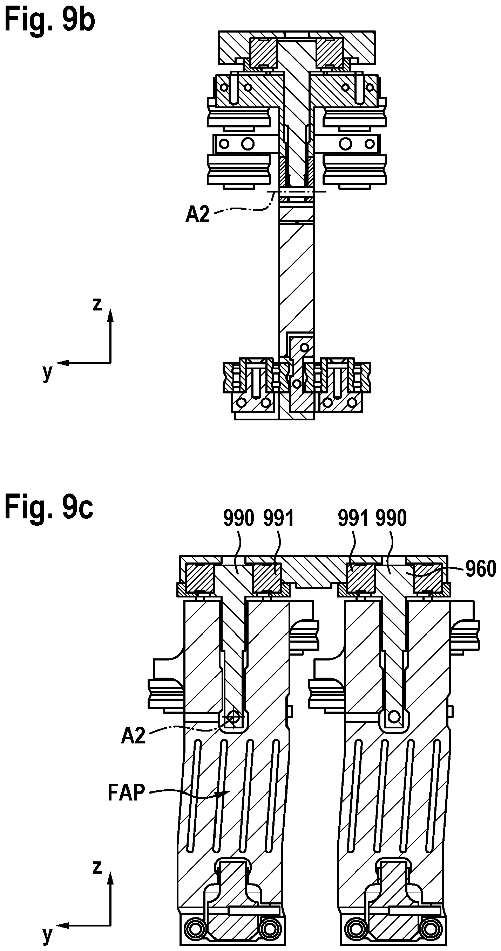

Fig. 9a schematically illustrates a carrier system 980 according to an embodiment in a perspective view, Figs. 9b and 9c illustrate the carrier system 980 of Fig. 9a in different cross sections. The carrier system 980 comprises two carrier modules 950, two pivot mechanisms 960, and a link component 970. The two carrier modules 950 can, basically, be similar to the carrier modules 450 of Figs. 4a to 4c. The pivot mechanism 960 can, basically, also be similar to the pivot mechanism 460, at least with respect to pivoting about the axis A1.

In addition, each of the pivot mechanisms 960 comprises an extension component 990 extending into an opening of the respective one of said two carrier modules 950 (i.e., compared to carrier module 450, for example, there is provided an opening in carrier module 950). The pivot mechanisms are pivotally connected to the respective one of said two carrier modules at the respective second axis A2 via the respective extension component 990; the extension component 990 can be connected, e.g., by means of a screw or bolt.

The pivot mechanisms 960 can also comprise bearings 991, e.g. four-point- bearings for improving pivoting, in particular, since the second pivot axis A2 is not in the centre of the motor components.

In this way, each of the pivot mechanisms 960 is pivotally connected to the respective one of said two carrier modules 950, pivotable about a respective second pivot axis A2. Said second pivot axis A2 is oriented laterally (here: in x-direction) and perpendicular to the conveying direction. Further, the second axis A2 is located within a pre-defined range, along the height direction (z-direction), around the force application point FAP. This force application point FAP is a point at which a moving force for moving the carrier module 750 within said track module applies at the carrier module, when operated.

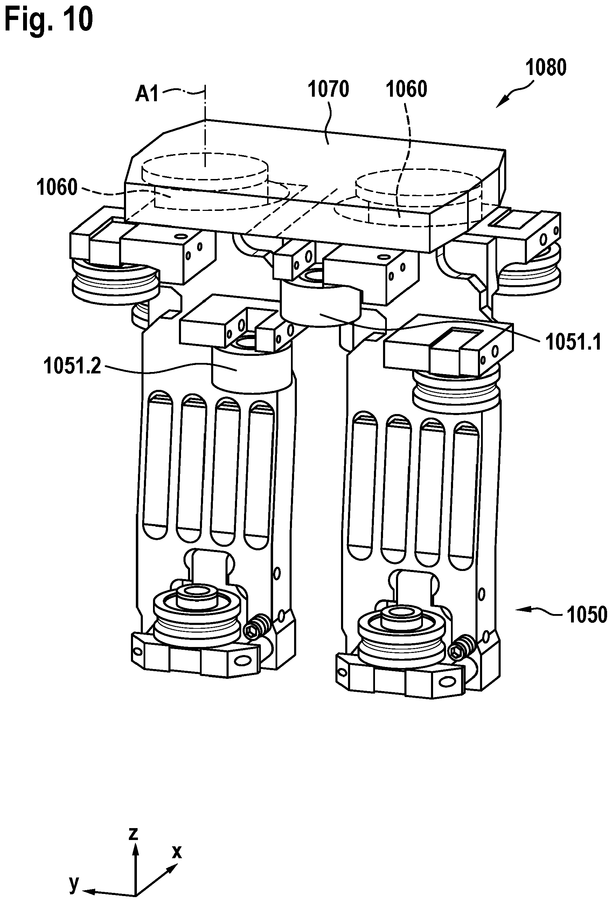

Fig. 10 schematically illustrates carrier system 1080 according to an embodiment in a perspective view. The carrier system 1080 comprises two carrier modules 1050, two pivot mechanisms 1060, and a link component 1070. The two carrier modules 1050 can, basically, be identical or similar to the carrier modules 450 of Figs. 4a to 4c. The pivot mechanism 1060 can, basically, also be similar to the pivot mechanism 460.

Other than the carrier modules 450, the carrier modules 1050 comprise selected wheels which are configured such that they are movable with respect to a respective bearing surface at the respective first side part or second side part of said track module, along said height direction (here: z-direction) and when in contact with the respective bearing surface. By means of example, the selected wheels 1051.1, 1052.2 (similar at the other side, that is not visible), are configured having a cylindrical surface allowing this movement.

Another embodiment might omit these selected wheels, for example, i.e., these selected wheels can be removed from a regular carrier module when connected to another such carrier module for establishing the carrier system.

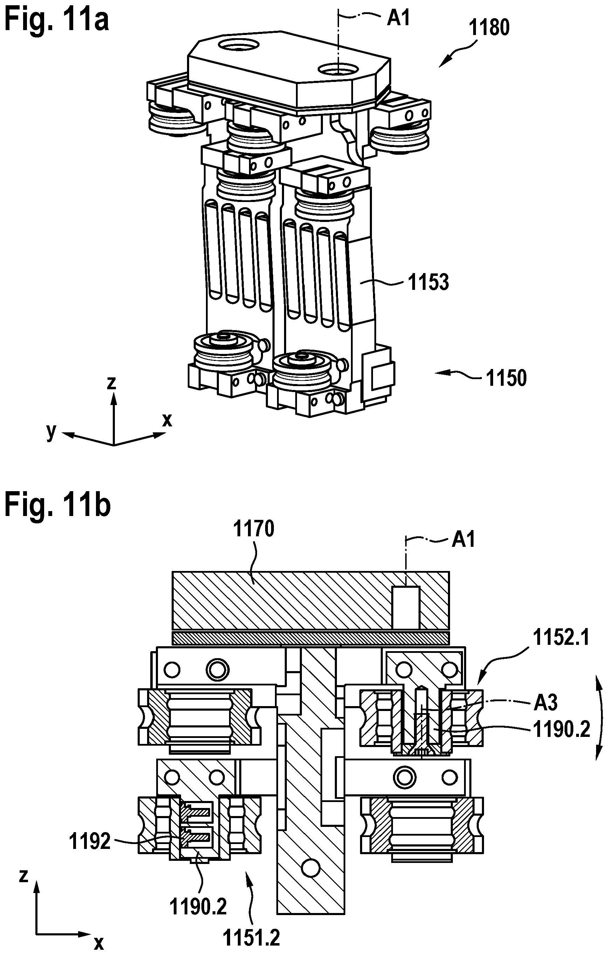

Fig. 11a schematically illustrates carrier system 1180 according to an embodiment in a perspective view, Fig. 11b illustrates the carrier system 1180 of Fig. 11a in a cross section. The carrier system 1180 comprises two carrier modules 1150, two pivot mechanisms 1160, and a link component 1170. The two carrier modules 1150 can, basically, be similar to the carrier modules 450 of Figs. 4a to 4c. The pivot mechanism 1160 can, basically, also be similar to the pivot mechanism 460, at least with respect to pivoting about the axis A1.

Other than the carrier modules 450, the carrier modules 1150 comprise selected wheels which are configured such that they have an additional degree of freedom. The selected first wheel 1151.2 is configured such that it is movable with respect to the respective carrier component 1153, along said height direction z. This can be achieved by providing a clearance in height direction at the support of the wheel on the bearing shaft. In addition, one or more springs 1192 can be provide to hold the selected first wheel 1151.2, basically, in position with respect to a bearing shaft 1190.1 of the respective carrier component, on which bearing shaft the selected first wheel is supported.

Further, the selected second wheel 1152.1 is configured such that it is pivotable, with respect to a bearing shaft 1190.2 of the respective carrier component, on which bearing shaft the selected second wheel is supported, about an axis A3 parallel to said conveying direction (which is in y direction in this case). This can be achieved by providing the bearing shaft 1190.2 with an outer radius slightly smaller than the inner radius of the wheel.

In this way, the double carrier can be made exactly constrained, several of the degrees of freedom are removed. Two wheels of each carrier module can be adapted. For each of the carrier modules, one wheel gained a degree of freedom in rotational direction about axis A3 while the other gained a degree of freedom in Z direction. Figs. 11a, 11b show s that, within one carrier module, two of the wheels are adjusted in such way that one gains a degree of freedom about axis A3 (which is along y direction), while the other gains a degree of freedom in Z-direction (which is along height direction).

Another embodiment might omit these selected wheels, for example, i.e., these selected wheels can be removed from a regular carrier module when connected to another such carrier module for establishing the carrier system.

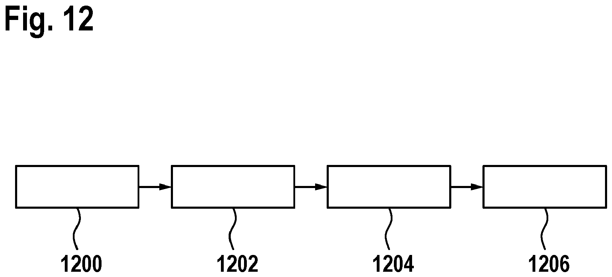

Fig. 12 illustrates a method for providing a linear motor conveying system according to an embodiment. In a step 1200, one or more track modules are provided, said one or each of said more track modules having a first side part and a second side part.

In a step 1202, two carrier modules are provided, wherein each of said carrier modules comprises a carrier component and at least two wheels. In a step 1204, said two carrier modules are pivotally connected with each other via a link component and two pivot mechanisms, such that the link component is pivotally connected with each of said link mechanism, pivotable about a respective first pivot axis, wherein said first pivot axes are oriented along a height direction and perpendicular to said conveying direction.

In addition, step 1206, the carrier system is configured such that at least one of said two carrier modules is pivotable about a second pivot axis, relative to a remaining part of the carrier system or relative to said track module when received therein, wherein said second pivot axis is oriented laterally and perpendicular to said conveying direction. THIs can be done as described with respect to any of Figs. 5a to 11.

## Claims

1. A carrier system (580, 680, 780, 880, 980, 1080, 1180) for a linear motor conveying system, comprising two carrier modules (550, 650, 750, 850, 950, 1050, 1150), two pivot mechanisms (560, 660, 760, 860, 960, 1060, 1160), and a link component,
wherein each of said two carrier modules comprises a carrier component and at least two wheels,
wherein each of said carrier modules is configured to be received between a first side part and a second side part of a track module,
wherein each of said two carrier modules is movable in a conveying direction (R) when received in a track module,
wherein at least one of the at least two wheels and at least a second one of the at least two wheels are arranged at the carrier component opposite to each other, such that the at least one first wheel faces the first side component and the at least one second wheel faces the second side component, when received in the track module,
wherein each of said two pivot mechanisms is arranged at a respective one of said two carrier modules,
wherein the link component is pivotally connected with each of said link mechanisms so as to connect said carrier modules with each other,
wherein the link component is pivotally connected with each of said link mechanism, pivotable about a respective first pivot axis (A1), wherein said first pivot axes are oriented along a height direction (z) and perpendicular to said conveying direction (R), and
wherein the carrier system is configured such that at least one of said two carrier modules is pivotable about a second pivot axis (A2), relative to a remaining part of the carrier system or relative to said track module when received therein, wherein said second pivot axis is oriented laterally and perpendicular to said conveying direction (R).

2. Th carrier system (580, 680, 780, 880, 980) of claim 1, wherein at least one of said two pivot mechanisms is pivotally connected to the respective one of said two carrier modules, pivotable about a respective second pivot axis.

3. Th carrier system (580, 680, 780, 880, 980) of claim 2, wherein the second axis is located at a force application point at the respective carrier module, or within a pre-defined range, along the height direction, around the force application point, wherein the force application point is a point at which a moving force for moving the carrier module within said track module applies at the carrier module, when operated.

4. The carrier system (580) of claim 3, wherein said at least one of said two pivot mechanisms is pivotally connected to the respective one of said two carrier modules via one or more leaf springs (590) of the carrier system.

5. The carrier system (980) of claim 3, wherein said at least one of said two pivot mechanisms comprises an extension component (990) extending into an opening of the respective one of said two carrier modules, and wherein said at least one of said two pivot mechanisms is pivotally connected to the respective one of said two carrier modules at the respective second axis via the respective extension component.

6. The carrier system (780) of claim 3, wherein said at least one of said two pivot mechanisms is pivotally connected to the respective one of said two carrier modules via a rod connection mechanism (790) of the carrier system.

7. The carrier system (680) of claim 3, wherein said at least one of said two pivot mechanisms is pivotally connected to the respective one of said two carrier modules via rollers (690) or balls of the carrier system, said rollers or balls being rollable along a curved surface of the respective one of said two carrier modules.

8. The carrier system (880) of claim 3, wherein said at least one of said two pivot mechanisms is pivotally connected to the respective one of said two carrier modules via one or more rubber elements (890) of the carrier system.

9. Th carrier system of any one of claims 4, or 6 to 8, wherein for said at least one pivot mechanisms and the respective one of said two carrier modules, the second axis is a virtual axis, located apart from the respective pivot mechanism.

10. The carrier system (580, 680, 780, 880, 980, 1080, 1180) of any one of the preceding claims, wherein each of said two carrier modules comprises six wheels,
wherein the at least one first wheel comprises three first wheels and the at least one second wheel comprises three second wheels.

11. The carrier system (1080) of claim 10, wherein, for at least one of said two carrier modules, a selected first wheel of the three first wheels and a selected second wheel of the three second wheels are configured such that they are movable with respect to a respective bearing surface at the respective first side part or second side part of said track module, along said height direction and when in contact with the respective bearing surface, and
wherein the remaining ones of the six wheels are configured such that they are not movable with respect to a respective bearing surface at the respective first side part or second side part of said track module, along said height direction and when in contact with the respective bearing surface.

12. The carrier system (1180) of claim 10, wherein, for at least one of said two carrier modules, the six wheels are configured such that they are not movable with respect to a respective bearing surface at the respective first side part or second side part of said track module, along said height direction and when in contact with the respective bearing surface, and
wherein a selected first wheel of the three first wheels is configured such that it is movable with respect to the respective carrier component, along said height direction, and
wherein a selected second wheel of the three second wheels is configured such that it is pivotable, with respect to a bearing shaft of the respective carrier component, about an axis parallel to said conveying direction.

13. The carrier system of any one of claims 1 to 9, wherein each of said two carrier modules comprises maximum four wheels, comprising maximum two first wheels and maximum two second wheels.

14. The carrier system of any one of the preceding claims, wherein each of said pivot mechanism comprises a rod (461) or rod shape structure to be pivotally connected to a respective through hole (471, 472) or bearing of the link component (480).

15. The carrier system of any one of the preceding claims, wherein each of said two carrier modules (350, 450) further comprises two counterpart electro-magnetic motor components,
wherein a first one of the two counterpart electro-magnetic motor components and a second one of the two counterpart electro-magnetic motor components are arranged at the respective carrier component opposite to each other, such that the first counterpart electro-magnetic motor component faces a first electro-magnetic motor component of the track module and the second counterpart electro-magnetic motor component faces a second electro-magnetic motor component of the track module, when received in the track module.

16. A linear motor conveying system (100), comprising one or more track modules and one or more carrier systems (480) of any one of the preceding claims, said one or more carrier systems (480) to be guided in the one or more track modules,
wherein said one or each of said more track modules is configured to receive a carrier module (350, 450) between a first side part (111, 311) and a second side part (112, 312), and
wherein the one or each of the more carrier systems (480) or their respective carrier modules are received or receivable in the one or each of the more track modules.

17. The linear motor conveying system (100) of claim 16, wherein said one or each of said more track modules comprises a track component, and six bearing surfaces,
wherein said track component comprises, along at least part of a conveying path (P, P1, P2), the first side part (111, 311), the second side part (112, 312) and a bottom part (113, 313), wherein the first side part and the second side part are arranged opposite to each other,
wherein three first ones (131, 331.1, 331.2, 331.3) of the six bearing surfaces are arranged at or formed integrally with the first side part (111, 311), and the three second ones (132, 332.1, 332.2, 332.3) of the six bearing surfaces are arranged at or formed integrally with the second side part (112, 312), such that the three first bearing surfaces and the three second bearing surface face each other.

18. A method for providing a linear motor conveying system, comprising:
Providing (1200) one or more track modules, said one or each of said more track modules having a first side part and a second side part,
Providing (1202) two carrier modules, wherein each of said carrier modules comprises a carrier component and at least two wheels, each of said carrier modules (150, 350, 650) to be received between the first side part and the second side part of the said one or one of said more track modules, wherein at least a first one of the two wheels and at least a second one of the two wheels are arranged at the carrier component opposite to each other, such that the at least one first wheel faces the first side component and the at least one second wheel faces the second side component, when received in the track module,
Connecting (1204) said two carrier modules pivotally with each other via a link component and two pivot mechanisms, such that the link component is pivotally connected with each of said link mechanism, pivotable about a respective first pivot axis, wherein said first pivot axes are oriented along a height direction and perpendicular to said conveying direction, and
Configuring (1206) the carrier system such that at least one of said two carrier modules is pivotable about a second pivot axis, relative to a remaining part of the carrier system or relative to said track module when received therein, wherein said second pivot axis is oriented laterally and perpendicular to said conveying direction.
